# EUROPÄISCHE PATENTSCHRIFT

(11) **EP 2 931 488 B1**
(45) Veröffentlichungstag und Bekanntmachung des Hinweises auf die Patenterteilung: **07.03.2018**
(21) Anmeldenummer: 13814491.0
(22) Anmeldetag: 13.12.2013
(51) Int. Cl.: B29B 15/12, B29C 70/50, B29C 70/46

(54) **VERFAHREN UND ANLAGE ZUR HERSTELLUNG VON FASERVERSTÄRKTEN FORMTEILEN, INSBESONDERE MITTELS FLIESSPRESSEN IN EINER FORMPRESSE**
METHOD AND INSTALLATION FOR PRODUCING FIBRE-REINFORCED MOULDED PARTS, IN PARTICULAR BY MEANS OF EXTRUSION IN AN EXTRUDER
PROCÉDÉ ET APPAREIL POUR FABRIQUER DES PIÈCES MOULÉES RENFORCÉES PAR FIBRES, NOTAMMENT PAR EXTRUSION, DANS UNE PRESSE DE MOULAGE

(30) Priorität: 13.12.2012 DE 102012112249
(43) Veröffentlichungstag der Anmeldung: 21.10.2015
(73) Patentinhaber: Dieffenbacher GmbH Maschinen- und Anlagenbau, 75031 Eppingen (DE)
(72) Erfinder: GRAF, Matthias, 75031 Eppingen (DE)
(86) Internationale Anmeldenummer: PCT/EP2013/076573
(87) Internationale Veröffentlichungsnummer: WO 2014/091001

(56) Entgegenhaltungen:
- EP-A1- 0 597 227
- CH-A5- 599 270
- DE-A1- 2 923 036
- DE-A1- 3 347 877
- DE-A1- 4 235 382
- DE-A1-102009 046 670
- FR-A1- 2 466 483
- US-A- 5 089 189

## Beschreibung

Die vorliegende Erfindung betrifft ein Verfahren zur Herstellung von faserverstärkten Formteilen (SMC), insbesondere mittels Fließpressen in einer Formpresse, nach dem Oberbegriff des Patentanspruchs 1 und weiter eine diesbezügliche Anlage nach dem Oberbegriff des Patentanspruchs 2.

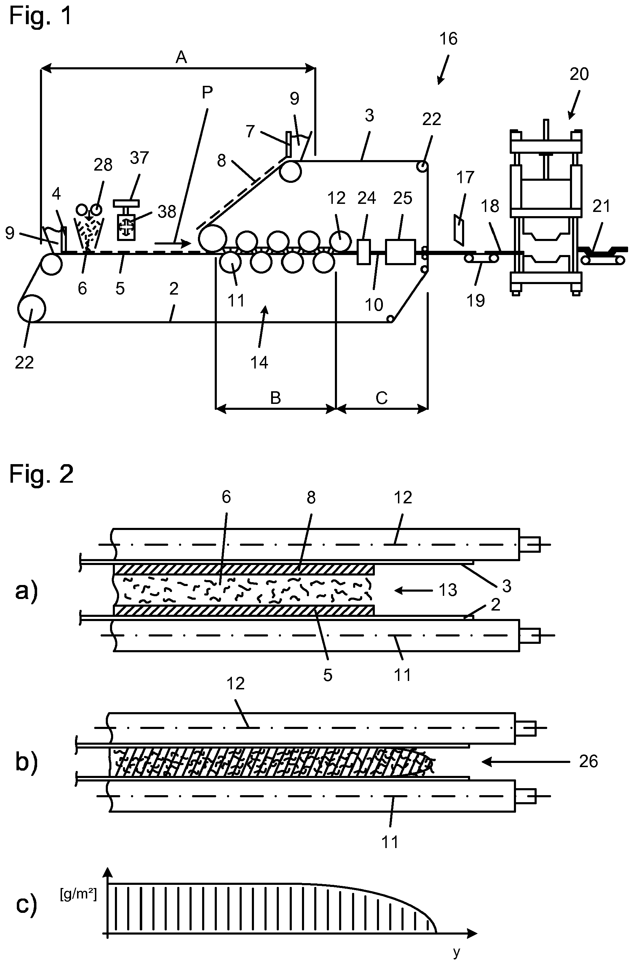

Wegen ihren guten mechanischen Eigenschaften und des günstigen Preises sind solche nach dem Sheet Molding Compound (SMC)-Verfahren hergestellten Formteile die am meisten eingesetzten duroplastischen Faserverbundkunststoffe unserer Zeit. Zur Herstellung von SMC-Teilen wird bekanntlich zuerst der Rohstoff, bestehend aus einer Harzmasse bzw. einem Harzansatz mit eingelagerten geschnittenen Glasfasern, hergestellt. Dieser Harzansatz wird in einem Aufbringbereich A einer Anlage zur Herstellung von faserverstärkten Formteilen (SMC) auf dünnen, beispielsweise durchsichtigen, Kunststofffolien (Tragfolien) als Tragmedium abgelegt mit den Fasern zusammengeführt und nach Durchlauf eines Walk- und Tränkbereichs B der Anlage in einem Eindickbereich C einem Reifeprozess unterzogen. Der natürliche Reifeprozess liegt bei 4-5 Tagen und dient dem Eindicken der im Harzansatz eingemischten Füllstoffe und/oder der verbesserten Tränkung der Fasern. Ein typischer Harzansatz besteht aus Harzen, Antischrumpfzusätzen, Füllstoffen, Fließverbesserer, integrierte Trennmittel, Inhibitoren und Härter. Dieser wird zu einer gut dispergierten Flüssigkeit auf vorgegebene Temperatur gerührt und im Aufbringbereich A der Anlage noch mit einem Eindickmittel, pulverförmig oder flüssig, versehen und über Rakel auf die untere und obere Tragfolie aufgerakelt, und wobei die Rakel bevorzugt in der Breite einstellbar ausgebildet sind, so dass auf ein und derselben Anlage unterschiedlich breite Harzmatten herstellbar sind. Auf die Harzansatzschicht der unteren Trägerfolie wird das Schnittglas, zum Beispiel von Endlos-Rovings mit Schneidwerken, aufdosiert. Danach legt sich die obere Trägerfolie mit dem Harzansatz auf den Schnittfaserbelag. Durch einen anschließenden Walkprozess im Walk- und Tränkbereich B werden die Fasern mit dem Harzansatz vermisch/getränkt und als Harzmatte anschließend auf eine Rolle gewickelt oder als flächiges Halbzeug für den natürlichen Reifeprozess im Eindickbereich C zwischengelagert. Durch den Reifeprozess dickt der Harzansatz so stark ein, dass die Trägerfolien rückstandsfrei abgezogen werden können. Aus den als flächiges Halbzeug oder in Rollen vorliegenden Harzmatten werden, abgestimmt auf das jeweils herzustellende Formteil, Zuschnittmatten herausgeschnitten und in einer Formpresse einfach oder als Paket abgelegt und verpresst (vgl. auch Fig. 1).

Dieses bekannte SMC-Verfahren wurde mittlerweile durch ein optimiertes Verfahren ergänzt. Dieses verbesserte, als D-SMC bezeichnete, Verfahren benötigt keine Reifezeit mehr bzw. die Reifezeit wird durch Anpassung des verwendeten Harzansatzes respektive durch die Additive derart verkürzt, dass nach dem Austrag aus einem als Flachbahnanlage ausgebildeten Eindickbereich C als Herstellungsvorrichtung für das SMC-Halbzeug direkt in einer Formpresse das SMC-Endprodukt hergestellt werden kann. Es entfällt eine langwierige oder mehrtätige Wartezeit der Reifung.

Dokument DE 10 2009 046670 offenbart ein Verfahren zur Herstellung von faserverstärkten Formteilen, insbesondere mittels Fließpressen in einer Formpresse, aus einer in einer Flachbandanlage kontinuierlich hergestellten faserverstärkten Harzmatte, wobei in der Flachbandanlage in einem Aufbringbereich für Harzansatz zumindest eine Harzansatzschicht auf ein unteres und/oder oberes Tragmedium aufgebracht und mit Fasern zusammengeführt, in einem nachfolgenden Walk- und Tränkbereich vermischt und schließlich in einem Eindickbereich zu einer, vorzugsweise endlosen, Harzmatte gereift wird.

Mit EP 1 386 721 A1 ist ein Verfahren und eine Anlage bekannt geworden, der die Aufgabe zugrunde lag, die Harzmatten (SMC-Halbzeug) mit der geeigneten Plastizität für eine unmittelbar folgende Direktverarbeitung zu Formteilen bereitzustellen. Besonders bevorzugt sollte dabei der Harzansatz unmittelbar auf Endlosbänder aufgerakelt, also auf Folien als Tragmedien verzichtet werden können. Zudem wurde bevorzugt die Steuerung der Reifezeit bzw. der Eindickzeit der Harzmatten im Wesentlichen dem Wärmeeintrag in einem temperierten, als Eindick-Durchlaufspeicher ausgebildeten Eindickbereich C durchgeführt. Mittlerweile ist das kontinuierliche Direktverfahren zur Herstellung faserverstärkter Formteile ohne Zwischenlagerung der Harzmatten für den Reifeprozess im industriellen Leben verwirklicht und weist deutliche Vorzüge im Bereich der Just-In-Time-Produktion auf, wobei wesentliche Probleme der Lagerhaltung und insbesondere der Just-In-Time-Lieferung vermieden werden können. Besonders ist es hervorzuheben, dass mit EP 1 386 721 A1 eine möglichst kompakte Anlage offenbart worden ist, in der in einem Eindick-Durchlaufspeicher für einen zeitlich vorgegebenen Reifeprozess, je nach der erforderlichen Länge, temperierbare Bandträger mäanderförmig in einem Gehäuse angeordnet wurden. Durch die Anordnung der Bandträger und ihrer Ausführung in Länge und Anzahl übereinander, kann der Reifeprozess für den auf ein Tragmedium (Endlosbänder und/oder Folien) aufgerakelten Harzansatz mit entsprechender Reifezeit ausgelegt werden. Grundsätzlich hat sich diese Anlage bewährt.

Allerdings musste beobachtet werden, dass sich während des Walkprozesses der Harzansatz zwischen den Tragfolien und/oder den Tragbändern unregelmäßig nach außen drückt, ohne alle am Rand der Harzansatzschichten liegenden trockenen Fasern zu benetzen. Durch das unregelmäßige nach außen drücken der Harzansatzschichten ist das Flächengewicht an den Rändern stark zum Rand hin abfallend, d.h. unterhalb des gewünschten Flächengewichtes.

Um der Benetzung am Rand der Harzansatzschichten liegender trockener Fasern zu verbessern ist bekannt, Tragfolien an deren Längskanten miteinander zu verschweißen, so dass die Ausdehnung des Harzflusses während des Walkprozesses an den Längsrändern der Harzansatzschichten eingegrenzt ist. Das Verschweißen der Tragfolien an deren Längskanten verhindert zwar einen Harzaustritt, garantiert jedoch noch keine Produktion von Harzmatten mit definiert festgelegter Randgeometrie an deren Längsseiten und insbesondere konstantem Flächengewicht über die Breite der Harzmatte. Außerdem müssen verschweißte Folien vor deren Entfernung erst wieder getrennt werden, was einen zusätzlichen Aufwand darstellt.

Aus den genannten Gründen ist im Stand der Technik vor dem Verpressen ausgereifter Harzmatten grundsätzlich eine Besäumung deren Längsseiten vorgesehen. Neben dem weiteren notwendigen zusätzlichen Arbeitsschritt führt dies zu Materialverlust und unerwünschtem Abfall.

Der vorliegenden Erfindung liegt die Aufgabe zugrunde, die Herstellung von faserverstärkten Formteilen (SMC), insbesondere mittels Fließpressen in einer Formpresse, zu verbessern.

Diese Aufgabe wird gelöst durch ein Verfahren zur Herstellung von faserverstärkten Formteilen mit den Merkmalen gemäß Patentanspruch 1 sowie durch eine diesbezügliche Anlage mit den Merkmalen gemäß Patentanspruch 2. Das erfindungsgemäße Verfahren wie auch die erfindungsgemäße Anlage zur Herstellung von faserverstärkten Formteilen, insbesondere mittels Fließpressen in einer Formpresse, gehen aus von einer in einer Flachbandanlage kontinuierlich hergestellten faserverstärkten Harzmatte, wobei in der Flachbandanlage in einem Aufbringbereich A für Harzansatz zumindest eine Harzansatzschicht auf ein unteres und/oder oberes Tragmedium aufgebracht und mit Fasern zusammengeführt, in einem nachfolgenden Walk- und Tränkbereich B vermischt und schließlich in einem Eindickbereich C zu einer, vorzugsweise endlosen, Harzmatte gereift wird.

Die vorliegende Erfindung zeichnet sich dadurch aus, dass zumindest beim Durchlauf der Harzansatzschicht/en durch den Walk- und Tränkbereich B entlang deren Längsränder und parallel zur Produktionsrichtung P jeweils zumindest ein Gurt mitgeführt ist, der während des Walkvorgangs die ein oder mehreren Tragmedien für die Harzansatzschicht/en seitlich so zusammendrückt, dass im Walk- und Tränkbereich B eine Seitenbegrenzung für die zu vermischenden Fasern und Harzansatzschicht/en ausgebildet ist.

Die erfindungsgemäße Seitenbegrenzung für die zu mischenden Fasern und Harzansatzschicht/en bewirkt, dass die Harzansatzschicht/en die durch die Gurte gebildete Begrenzung nicht durchdringen und weiter nach außen quer zur Produktionsrichtung P fließen. Vielmehr werden durch den so begrenzten Harzfluss alle am Längsrand der Harzansatzschicht/en liegenden trockenen Fasern benetzt, also der im Stand der Technik häufig anzutreffende Verbleib trockener Fasern und die deshalb erforderliche Besäumung der Längsseiten ausgereifter Harzmatten vor deren Weiterverarbeitung vermieden. Die vollständige Benetzung auch am Längsrand der Harzansatzschicht/en liegender trockener Fasern dagegen erzielt vorteilhaft eine Harzmatte mit konstantem Flächengewicht über die Breite, deren Längsseiten vor Weiterverarbeitung, beispielsweise mittels Fließpressen in einer Formpresse, nicht mehr besäumt werden müssen.

Vorteilhafte Aus- und Weiterbildungen, welche einzeln oder in Kombination miteinander eingesetzt werden können, sind Gegenstand der abhängigen Ansprüche.

Soweit die Tragmedien für die Harzansatzschicht/en allein durch ein unteres und ein oberes endloses Band gebildet sind, mit welchen die Harzansatzschicht/en durch den Aufbringbereich A, den Walk- und Tränkbereich B und ggf. durch einen Eindickbereich C geführt sind, ist bevorzugt, dass die Gurte oberhalb und/oder unterhalb der endlosen Bänder angeordnet sind. Das Aufrakeln der Harzansatzschicht/en unmittelbar auf Endlosbänder hat die in der EP 1 386 721 A1 aufgezeigten Vorteile, auf welche vollumfänglich Bezug genommen wird. Im Rahmen der vorliegenden Erfindung kann der Eindickbereich C klassisch als 4-5 Tage-Reiferaum oder bevorzugt - wie beispielsweise in der EP 1 386 721 A1 beschrieben - als Eindick-Durchlaufspeicher (nicht dargestellt) ausgebildet sein zwecks (bevorzugten) Erhalts einer endlosen Harzmatte zur Realisierung eines fortschreitenden Fertigungsprozesses bis zu einer der Flachbandanlage nachgelagerten Formpresse. Im erstgenannten Fall kann sich der Durchlauf der endlosen Bänder auf den Aufbringbereich A und den Walk- und Tränkbereich B beschränken; im zweitgenannten Fall können vorteilhafterweise die Endlosbänder auch den, bevorzugt als Eindick-Durchlaufspeicher ausgebildeten, Eindickbereich C mit durchlaufen, um ein Auswalken der Ränder vollständig zu verhindern. Somit ist nicht nur ein Besäumen nicht mehr notwendig, es können Ausschnitte bis zum Randbereich getätigt werden bzw. kann der Rand selbst bereits eine Schnittkante für eine Zuschnittmatte bilden.

Soweit die Tragmedien für die Harzansatzschicht/en alternativ durch eine untere und eine obere Tragfolie gebildet sind, mit welchen die Harzansatzschicht/en durch den Aufbringbereich A, den Walk- und Tränkbereich B und ggf. durch einen Eindickbereich C geführt sind, ist bevorzugt, dass die Gurte oberhalb und/oder unterhalb einer bzw. beider Tragfolien angeordnet sind. Es versteht sich, dass beim ausschließlichen Einsatz von Tragfolien als Trag- und Transportmedium für die Harzansatzschicht/en Tragfolien mit hinreichender Zugfestigkeit Verwendung finden, mit welchen sich die Harzansatzschicht/en durch die einzelnen Bereiche der Anlage transportieren lassen.

Weniger zugfeste und damit preiswertere Tragfolien können gemäß einer Ausgestaltung der Erfindung Verwendung finden, wenn, zumindest im Walk- und Tränkbereich B, in welchem die Tragmedien insb. mechanisch am stärksten belastet sind, die untere Tragfolie von einem unteren Stützband und/oder die obere Tragfolie von dem oberen Stützband gestützt sind.

Vorstehendem Gedanken Rechnung tragend hat sich in einer weiteren Ausgestaltung der Erfindung auch bewährt, im Aufbringbereich A, in welchem die Tragmedien in Kontakt mit dem Harzansatz kommen, und/oder im Eindickbereich C, in welchem die Tragmedien insb. thermisch am stärksten belastet sind, die untere Tragfolie mittels eines unteren Stützbandes und/oder die obere Tragfolie mittels eines oberen Stützbandes zu stützen. Es versteht sich, dass auch beim abschnittsweisen Einsatz von Stützbändern zumindest im Walk- und Tränkbereich B und vorzugsweise auch im Aufbringbereich A und/oder Eindickbereich C Tragfolien mit einer solch hinreichenden Zugfestigkeit Verwendung finden, dass die Übergaben der Tragfolien zwischen den Bereichen A zu B und ggf. zu C möglichst ohne das Vorhalten gesonderter Übergabevorrichtungen ermöglicht ist.

Anstelle mehrerer Stützbänder können freilich auch die die Flachbandanlage durchlaufenden endlosen Bänder als Stützmedien für die Tragfolien dienen, weshalb in einer Weiterbildung der Erfindung vorgeschlagen ist, dass im Aufbringbereich A, den Walk- und Tränkbereich B und ggf. den Eindickbereich C die Tragfolien von endlosen Bändern gestützt sind. Die Tragfolien werden in dieser Ausgestaltung somit mittels endlosen Bändern durch die einzelnen Bereiche transportiert. Die dabei einhergehende stetige Unterstützung der Tragfolien durch endlose Bänder beim Durchlauf der Harzansatzschicht/en durch die Flachbandanlage gestatten vorteilhaft die Verwendung von dünneren Folien als bei Rückgriff auf Folien ohne jedwede oder nur teilweiser Unterstützung.

Unabhängig davon, welche Art von Tragfolien Verwendung finden hat der Einsatz von Tragfolien stets zum Vorteil, dass die Gurte und ggf. etwaige Stützbänder für die Folien nicht unmittelbar mit Harzansatz in Kontakt kommen, was jeweils deren Einsatzzeit erhöht.

In einer weiteren Ausgestaltung hat sich bewährt, wenn die Gurte mit ihrer einen Oberseite an einer Tragfolie anliegend und mit ihrer anderen Oberseite an einem Stütz- oder endloses Band anliegend geführt sind. So werden die Gurte vorteilhaft durch die Vorspannung der Bänder unterstützt und können zwischen dem oberen und dem unteren Stütz- oder endlosen Band laufend mit den Bändern eine gewünschte Randgeometrie optimal ausbilden.

Gemäß einer weiteren Ausgestaltung ist bevorzugt, dass die Gurte zumindest im Walk- und Tränkbereich B der Flachbandanlage korrespondierend zu dem dortigen Stütz- oder endlosen Band geführt sind. Im Fall von auf den Walk- und Tränkbereich B beschränkter Stützbänder können die Gurte vorteilhaft unmittelbar vor und nach der Walk- und Tränkstrecke B zu und abgeführt werden. Insbesondere kann die Zu- und Abführung der Gurte dabei, wie deren Anordnung insgesamt, aus bzw. innerhalb einer Vertikalen erfolgen, also vorzugsweise korrespondierend zu den, den Walk- und Tränkbereich B durchlaufenden Stützbändern, was vorteilhaft den Rückgriff auf zusätzliche Führungsmittel (Rollen, Antriebe, etc.) ganz oder teilweise überflüssig macht. Alternativ und unabhängig davon, welche Trag- und/oder Stützmedien Verwendung finden, ist auch denkbar, die Gurte aus einer horizontalen, insbesondere seitlich einschwenkenden, Anordnung heraus vor und nach dem Walk- und Tränkbereich B zu- und abzuführen. Soweit es schließlich insbesondere für das Aushärten bestimmter Harzansatzschicht/en förderlich ist, können die Gurte freilich auch durch die gesamte Anlage, insbesondere korrespondierend zu den Endlosbändern, mitgeführt werden.

In einer Weiterbildung der Erfindung ist vorgesehen, dass die Gurte passiv angetrieben sind, beispielsweise durch die Stütz- oder Endlosbänder und/oder durch Walkrollen, die im Walk- und Tränkbereich B angeordnet sind und die eine durch untere und obere Walkrollen gebildete Walk- und Tränkvorrichtung ausbilden. Diese Walkrollen sind selbst nicht angetrieben, sondern werden ebenfalls von einem Bandantrieb indirekt angetrieben. Die Gurte werden über die Stütz- oder endlosen Bänder gespannt und erfahren so einen Kraftschluss, so dass vorteilhaft kein gesonderter Antrieb für die Gurte vorzusehen ist.

Erfindungsgemäß bevorzugt finden Gurte Verwendung, die aus Schaumstoff oder einem alternativem Material mit bedingt komprimierbaren Eigenschaften gebildet sind. Die komprimierbare Wirkung des Gurtmaterials, insbesondere dessen Federelastizität, dient vorteilhaft zum Ausgleich von Dickenschwankungen zwischen den Stütz- oder endlosen Bändern, welche im Bereich des freien Durchhangs zwischen den Walkrollen und/oder Umlenkwalzen insbesondere im Walk- und Tränkbereich B auftreten.

Eine effektive Abdichtung ist nach der Erfindung bevorzugt mit Gurten gewährleistet, deren Schaumstoff oder alternatives Material in seiner Härte und Dicke so gewählt ist, dass bei der Komprimierung des Gurtes im Spalt zwischen in Produktionsrichtung P benachbarten Walkrollen des Walk- und Tränkbereiches B, ein zumindest minimaler Anpressdruck zwischen dem oberen und unteren Tragmedium entsteht, der größer ist, als der von den Walkrollen auf die Harzansatzschichten ausgeübte Flächendruck. Ein solcher Anpressdruck, der nicht kleiner als der Flächendruck sein darf aber beliebig größer sein kann, gewährleistet ausreichend vorteilhaft die effektive Abdichtung zwischen den Tragmedien (Tragbändern oder Tragfolien) und den Gurten, wobei der Anpressdruck eines jeden Gurtes auf die Tragmedien auch an der Stelle der größten Aufweitung, d.h. in der Mitte zwischen zwei Walkrollen, an denen die Tragmedien sich am stärksten durchbiegen, durch die komprimierbare Eigenschaften bzw. Federelastizität eines jeden Gurtes, immer noch größer ist, wie der Fließdruck in der Harzschicht, der an dieser Stelle gegen einen Gurt wirkt.

In einer Weiterbildung der Erfindung ist vorgesehen, dass wenigstens einer der Gurte in der Breitenposition zu der oder den Harzansatzschicht/en, in der die Gurte mitlaufen, verstellbar ausgebildet ist; vorzugsweise abgestimmt auf die Einstellbarkeit der Breite der Rakel und der Faserzuführvorrichtung. Die Einstellbarkeit der Breite und die nach der Erfindung nicht mehr notwendige Besäumung der Längsseiten der ausgereiften Harzmatte gestattet vorteilhaft die Herstellung von Harzmatten in einer auf weitere Verarbeitungsgänge (insb. Pressenwerkzeuge) angepasste Breite.

In einer weiteren Ausgestaltung kann vorgesehen sein, dass zur Breiteneinstellung wenigstens einen Gurtes dieser über zumindest eine quer zur Walk- und Tränkstrecke B verstellbare Führungsrolle geführt ist, die vorzugsweise auf einer quer verlaufenden Achse oder Traverse verstellbar, ggf. über eine Verstellspindel, gelagert ist.

Die vorliegende Erfindung betrifft schließlich auch eine Harzmatte, hergestellt in einem Verfahren nach Anspruch 1 oder in einer Anlage nach einem der Ansprüche 2 bis 12, gekennzeichnet durch eine ohne Besäumung deren Längsseiten erhaltene Harzmatte mit einem über ihre Breite konstantem Flächengewicht.

Eine solchermaßen hergestellte Harzmatte ist gegenüber bestehenden Fertigungsprozessen unmittelbar weiter verarbeitbar. Durch Wegfall der bislang notwendigen Harzmatten-Besäumung können der Fertigungsprozess beschleunigt und die Gestehungskosten gesenkt werden. Ferner entfällt die teure Entsorgung der Besäumabfälle.

Diese und weitere Merkmale und Vorteile der Erfindung werden nachfolgend anhand der in den Zeichnungen dargestellten beispielhaften Herstellung eines faserverstärkten Kunststoffbauteils - auf welche die vorliegende Erfindung jedoch nicht beschränkt ist - näher erläutert.

### Es zeigen schematisch:

- Fig. 1: beispielhaft eine Anlage zur kontinuierlichen Herstellung von faserverstärkten Harzmatten im Zuge der Herstellung von faserverstärkten Formteilen (SMC) mittels Fließpressen in einer Formpresse nach dem Stand der Technik in einer Seitenansicht mit einer Produktionsrichtung P von links nach rechts, wobei die Tragmedien für die Harzansatzschichten durch ein unteres und ein oberes die Anlage endlos durchlaufendes Band gebildet sind, zwischen denen die Harzmatten hergestellt werden;
- Fig. 2: die Bildung von Harzmatten beim Einführen und beim Ausführen der auf Endlosbändern oder Tragfolien (nicht dargestellt) aufgerakelten Harzansatzschichten zwischen oberen und unteren Walkrollen einer im Walk- und Tränkbereich B angeordneten Walk- und Tränkvorrichtung einer Anlage nach Fig. 1;

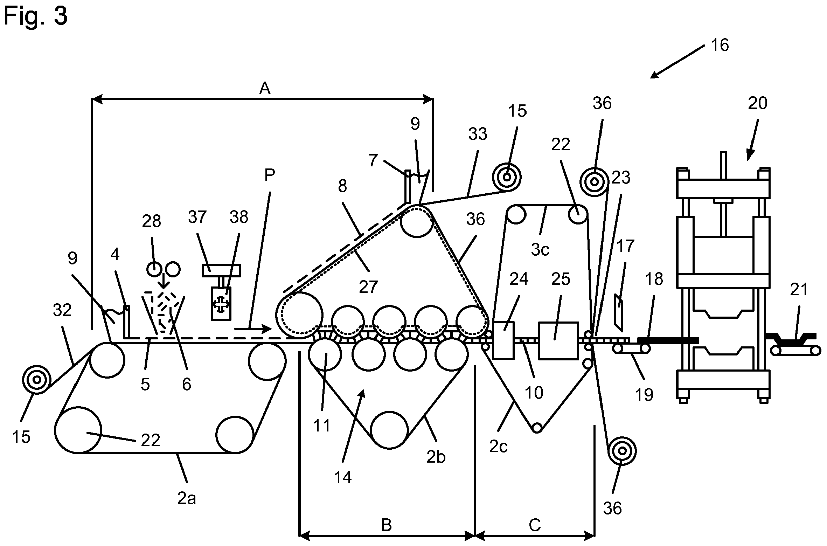

- Fig. 3: beispielhaft eine Anlage zur kontinuierlichen Herstellung von faserverstärkten Harzmatten im Zuge der Herstellung von faserverstärkten Formteilen mittels Fließpressen in einer Formpresse nach der Erfindung in einer Seitenansicht mit einer Produktionsrichtung P von links nach rechts, wobei die Tragmedien für die Harzansatzschichten durch eine untere und eine obere Tragfolie gebildet sind, zwischen denen die Harzmatten hergestellt werden, und wobei bevorzugt die Tragfolien beim Durchlauf durch die Anlage wenigstens abschnittsweise von Stützbändern unterstützt sind;

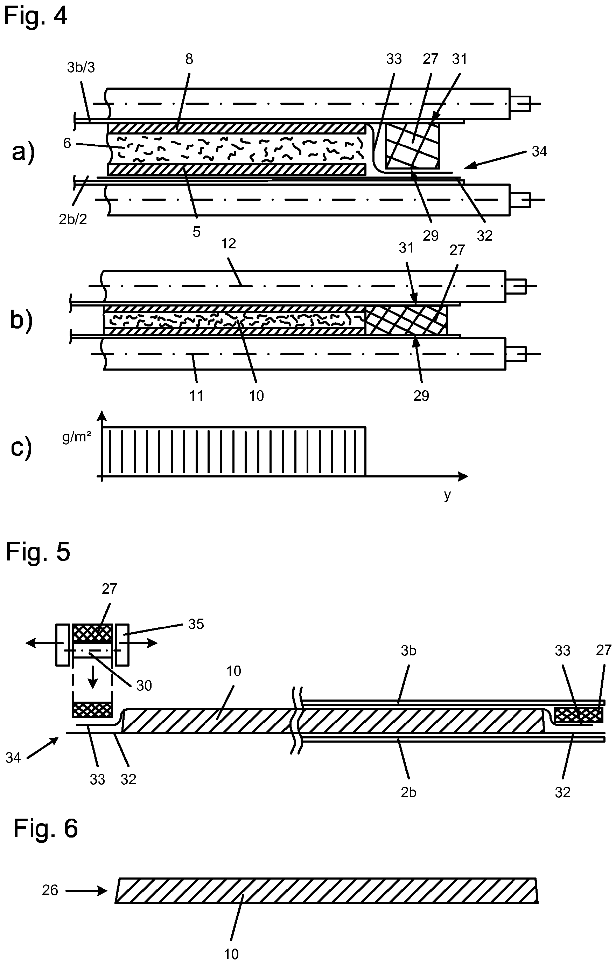

- Fig. 4: die Bildung von Harzmatten beim Einführen und beim Ausführen der auf Endlosbändern oder Tragfolien (nicht dargestellt) aufgerakelten Harzansatzschichten zwischen oberen und unteren Walkrollen einer im Walk- und Tränkbereich B angeordneten Walk- und Tränkvorrichtung einer Anlage nach Fig. 3;
- Fig. 5: die verstellbare Ausbildung eines mitgeführten Gurtes in einer Anlage gemäß Fig. 3; und
- Fig. 6: eine Harzmatte, allein hergestellt nach der Erfindung ohne Besäumung deren Längsseiten.

Bei der nachfolgenden Beschreibung bevorzugter Ausführungsbeispiele bezeichnen gleiche Bezugszeichen gleicher Bauteile.

Fig. 1 zeigt beispielhaft eine Anlage zur kontinuierlichen Herstellung von faserverstärkten Harzmatten 10 im Zuge der Herstellung von faserverstärkten Formteilen 21 mittels Fließpressen in einer Formpresse 20 nach dem Stand der Technik in einer Seitenansicht mit einer Produktionsrichtung P von links nach rechts. Vor der Herstellung faserverstärkter Formteile 21 mittels Fließpressen werden in markanten Teilen der Anlage aus einem Harzansatz 9 und Fasern 6 mit einer Harzansatzaufbringstrecke A, einer Walk- und Tränkstrecke B und einem Eindickbereich C faserverstärkte Harzmatten 10 erzeugt. Die für gewöhnlich üblichen Dosierbehälter und die Mischvorrichtung für die Einzelkomponenten des Harzansatzes 9 sind nicht dargestellt.

Die Anlage ist bevorzugt als eine Flachbahnanlage 16 ausgebildet, in der in der Aufbringstrecke A für den Harzansatz 9, der Walk- und Tränkstrecke B und dem Eindickbereich C keine Einmalfolien Verwendung finden müssen, sondern zwei wieder verwendbare, endlose Bänder 2 und 3 zum Einsatz kommen können, welche über Umlenkrollen 22 durch diese Anlagenteile führen und dabei die Harzmatten 10 ausformen. Das Aufrakeln der Harzansatzschicht/en 5, 8 unmittelbar auf die Bänder 2, 3 hat die in der EP 1 386 721 A1 aufgezeigten Vorteile, auf welche vollumfänglich Bezug genommen wird. Bestimmte Harzansätze 9, insbesondere stark adhäsiv oder mit die Bänder 2 und 3 angreifenden chemischen Einsatzstoffen versehene Harzansätze 9, können dennoch auf die Bänder 2 und 3 aufzulegende Einmalfolien voraussetzen. Der vorgemischte Harzansatz 9 wird mit einem unteren Rakel 4 auf das untere Band 2 zur Harzansatzschicht 5 aufgerakelt. Auf diese untere Harzansatzschicht 5 werden dann mit Hilfe einer Faserzuführvorrichtung 28 Fasern 6 als Schnittglas in Form von Lang- und/oder Kurzfasern aufdosiert. Es können auch, insbesondere für tragende Teile oder geometrische Besonderheiten im Formteil 21, Verstärkungsbereiche durch die Einlage von zusätzlichen Endlosfasern, Fasermatten und/oder weiteren Harzansatzschichten in notwendiger Geometrie generiert werden. Hierzu ist eine Auftragsvorrichtung 38 beliebig angeordnet. Die Auftragsvorrichtung 38 weist vorzugsweise zumindest eine Quertraverse 37 auf, an der die Auftragsvorrichtung 38 mittels geeigneter Linearförderer in und/oder quer zur Produktionsrichtung oder zur Höhenverstellung verfahren werden kann. Es wäre auch denkbar anstelle der Auftragsvorrichtung 38 einen Industrieroboter (nicht dargestellt) mit der gezielten und ggf. wiederkehrenden Ablage von Verstärkungsmittel zur Bildung von Verstärkungsbereichen zu beauftragen. Gleichzeitig erfolgt ein Aufrakeln der Harzansatzschicht 8 mittels einem oberen Rakel 7 auf das obere Band 3. Nach dem Zusammenführen der beiden Harzansatzschichten 5 und 8 mit den aufdosierten Fasern 6 und ihr Einführen zwischen untere und obere Walkrollen 11 und 12 einer in der Walk- und Tränkstrecke B angeordneten Walk- und Tränkvorrichtung 14 wird zwischen den Bändern 2 und 3 eine Harzmatte 10 geformt, wobei die Fasern 6 mit dem Harzansatz 9 durchtränkt und zusammengewalkt werden. Die so geformte endlose Harzmatte 10 wird dann zum Reifen im Eindickbereich C durch eine Eindickvorrichtung 25 geführt. In Produktionsrichtung vor der Eindickvorrichtung 25 kann im Eindickbereich C auch eine Heizvorrichtung 24 angeordnet sein, vorzugsweise eine Mikrowellenvorrichtung. Ist die Harzmatte 10 gereift, wird sie beispielsweise mittels Messerleisten (nicht dargestellt) von den Bändern 2 und 3 abgelöst und einer Zuschnittvorrichtung 17, vorzugsweise einer Übergabevorrichtung 19 zugehörig, zugeführt. In der Zuschnittvorrichtung 17 wird die gereifte Harzmatte 10 entlang ihrer Längsseiten 26 besäumt und je nach Vorgabe in der Länge geschnitten, und mittels in der Übergabevorrichtung 19 angeordneter Übergabemittel, hier beispielsweise ein Transportband, als Zuschnittmatte 18 der Formpresse 20 zugeführt und in der Formpresse 20 zum Formteil 21 verpresst und ausgehärtet. Alternativ können in sequenzieller Abfolge unterschiedliche Zuschnittmatten 18 aus der endlosen Harzmatte 10 herausgeschnitten werden, wobei vorzugsweise der Zuschnitt Abfall vermeidend optimiert wird.

Fig. 2 zeigt die Bildung von Harzmatten 10 beim Einführen und beim Ausführen der auf Endlosbändern 2 und 3 oder Tragfolien (nicht dargestellt) aufgerakelten Harzansatzschichten 5 und 8 zwischen den Walkrollen 11 und 12 einer im Walk- und Tränkbereich B angeordneten Walk- und Tränkvorrichtung 14 einer Anlage nach Fig. 1. Dabei zeigen in einer senkrecht zur Transportrichtung P liegenden, überspritzt dargestellten Schnittebene Fig. 2a den Zeitpunkt des Einführens, also un-gewalkten, und Fig. 2b den Zeitpunkt des Ausführens, also gewalkten Zustand von Harzansatzschichten 5 und 8 und Fasern 6. Fig. 2b verdeutlicht, wie sich während des Walkprozesses der Harzansatz 9 zwischen den Tragfolien (nicht dargestellt) bzw. den Bändern 2 und 3 unregelmäßig nach außen gedrückt hat, ohne alle am Rand 13 der Harzansatzschichten 5 und 8 liegenden trockenen Fasern 6 zu benetzen. Die Folge ist eine undefinierte Randgeometrie der Längsseite 26 der Harzmatte 10 mit nicht konstantem Flächengewicht über dessen Breite, wie dies in Fig. 2c aufgetragen ist. Auf diesen Anlagen hergestellte Harzmatten 10 bedürfen vor ihrer Weiterverarbeitung daher stets einer Besäumung ihrer Längsseiten 26, oder bei gezielten geometrischen Ausschnitten muss ein entsprechender Abstand zum Rand eingehalten werden.

Fig. 3 zeigt beispielhaft eine Anlage zur kontinuierlichen Herstellung von faserverstärkten Harzmatten 10 im Zuge der Herstellung von faserverstärkten Formteilen 21 mittels Fließpressen in einer Formpresse 20 nach der Erfindung in einer Seitenansicht mit einer Produktionsrichtung P von links nach rechts. Vor der Herstellung faserverstärkter Formteile 21 mittels Fließpressen werden wie bei einer Anlage nach dem Stand der Technik in markanten Teilen der Anlage aus einem Harzansatz 9 und Fasern 6 in einer Aufbringstrecke A, einer Walk- und Tränkstrecke B und einem Eindickbereich C faserverstärkte Harzmatten 10 erzeugt, so dass im Folgenden nur auf alternative oder kumulative Ausgestaltungen eingegangen wird. Die Tragmedien für die Harzansatzschichten 5, 8 sind unten und oben jeweils durch eine Tragfolie 32 und 33 gebildet, zwischen denen die Harzmatten 10 hergestellt werden. Dazu sind bezüglich des Aufbringbereichs A für Harzansatz 9 planmäßig je ein Folienabzug 15 zum Abzug je einer Tragfolie 32 und 33 vorgesehen. Vorzugsweise sind die Tragfolien 32, 33 beim Durchlauf durch die Anlage wenigstens abschnittsweise von Stützbändern 2a, 2b, 2c; 3b, 3c unterstützt. Der vorgemischte Harzansatz 9 wird mit einem unteren Rakel 4 auf die auf den unteren Stützbändern 2a, 2b, 2c aufliegende untere Folie 32 zur Harzansatzschicht 5 aufgerakelt. Auf diese untere Harzansatzschicht 5 werden dann mit Hilfe einer Faserzuführvorrichtung 28 Fasern 6 aus Schnittglas als Lang- und/oder Kurzfasern aufdosiert. Gleichzeitig erfolgt ein Aufrakeln der Harzansatzschicht 8 mittels einem oberen Rakel 7 auf die auf einem oberen Stützband 3b aufliegende obere Folie 33. Nach dem Zusammenführen der beiden Harzansatzschichten 5 (mit den aufdosierten Fasern 6) und 8 und ihr Einführen zwischen untere und obere Walkrollen 11 und 12 wird zwischen den Stützbändern 2b und 3b beziehungsweise den darauf aufliegenden Folien 32 und 33 die Harzmatte 10 in der Walk- und Tränkvorrichtung 14 geformt, wobei die Fasern 6 mit dem Harzansatz 9 durchtränkt und zusammengewalkt werden.

Anders als in der Anlage nach dem Stand der Technik ist beim Durchlauf der Harzansatzschichten 5, 8 durch den Walk- und Tränkbereich B entlang deren Ränder 13 und parallel zur Produktionsrichtung P erfindungsgemäß jeweils zumindest ein Gurt 27 mitgeführt, der während des Walkvorgangs die ein oder mehreren Tragmedien für die Harzansatzschichten 5, 8 seitlich so zusammendrückt, dass im Walk- und Tränkbereich B eine Seitenbegrenzung für die zu vermischenden Fasern 6 mit den Harzansatzschichten 5, 8 ausgebildet ist. Die erfindungsgemäße Seitenbegrenzung für die zu mischenden Fasern 6 und die Harzansatzschichten 5, 8 bewirkt, dass die Harzansatzschichten 5, 8 die durch die Gurte 27 gebildete Begrenzung nicht durchdringen. Vielmehr werden durch den so begrenzten Harzfluss alle am Rand 13 der Harzansatzschichten 5, 8 liegenden trockenen Fasern 6 benetzt, also der im Stand der Technik häufig anzutreffende Verbleib trockener Fasern 6 und die deshalb erforderliche Besäumung der Längsseiten 26 ausgereifter Harzmatten 10 vor deren Weiterverarbeitung vermieden. Nach dem Reifen der Harzmatte 10 im Eindickbereich C weist diese nur noch bedingt klebrige Oberflächen auf, so dass am Austrittspunkt 23 nach dem Eindickbereich C die Folien 32 und 33 vorzugsweise vor einer Übergabevorrichtung 19 von der Harzmatte 10 einfach mittels zweier Folienaufwicklungen 36 abgezogen und einer Zuschnittvorrichtung 17, vorzugsweise einer Übergabevorrichtung 19 zugehörig, zugeführt werden können. In der Zuschnittvorrichtung 17 wird die Harzmatte 10 je nach Vorgabe, vorzugsweise nur noch in der Länge geschnitten, und mittels in der Übergabevorrichtung 19 angeordneter Übergabemittel, hier wiederum ein Transportband, als Zuschnittmatte 18 der Formpresse 20 zugeführt und in der Formpresse 20 zum Formteil 21 verpresst und ausgehärtet.

Fig. 4 zeigt die Bildung von Harzmatten 10 beim Einführen und beim Ausführen der auf Tragfolien 32 und 33 aufgerakelten Harzansatzschichten 5 und 8 zwischen obere 12 und untere 11 Walkrollen einer im Walk- und Tränkbereich B angeordneten Walk- und Tränkvorrichtung 14 einer Anlage nach der Erfindung. Dabei zeigen in einer senkrecht zur Transportrichtung P liegenden Schnittebene Fig. 4a den Zeitpunkt des Einführens, also ungewalkten, und Fig. 4b den Zeitpunkt des Ausführens, also gewalkten Zustand von Harzansatzschichten 5 und 8 und Fasern 6 aus der Walk- und Tränkstrecke B. Erkennbar ist, wie mit beim Durchlauf der Harzansatzschichten 5, 8 durch den Walk- und Tränkbereich B entlang deren Ränder 13 und parallel zur Produktionsrichtung P jeweils zumindest ein Gurt 27 mitgeführt ist, der während des Walkvorgangs die Tragmedien, hier die Tragfolie 33, für die Harzansatzschicht/en 5, 8 seitlich so zusammendrückt, dass im Walk- und Tränkbereich B eine Seitenbegrenzung für die zu vermischenden Fasern 6 und die Harzansatzschichten 5, 8 ausgebildet ist. Die Folge ist eine definierte Randgeometrie am Längsrand 26 der Matte 10, wie dies in Fig. 4b gezeigt ist. Die vollständige Benetzung auch am Rand 13 der Harzansatzschichten 5, 8 liegender trockener Fasern 6 erzielt zudem vorteilhaft eine Harzmatte 10 mit konstantem Flächengewicht über die Breite (auch am Längsrand 26), wie dies in Fig. 4c aufgetragen ist. Solchermaßen hergestellt Harzmatten 10 bedürfen vor ihrer Weiterverarbeitung vorteilhaft keiner Besäumung ihrer Längsseiten 26.

Fig. 4a und 4b verdeutlichen zudem, wie die Gurte 27 mit ihrer einen Oberseite 29 an einer Tragfolie 32, 33 anliegend und mit ihrer anderen Oberseite 31 an einem Stützband 2b, 3b oder endlosem Band 2, 3 anliegend geführt sind. So werden die Gurte 27 vorteilhaft durch die Vorspannung der Stützbänder 2b und 3b unterstützt und können zwischen dem oberen und dem unteren Stützband 2b, 3b - oder bei Einsatz von endlosen Bändern 2, 3 - mitlaufend eine gewünschte Randgeometrie optimal ausbilden. Dementsprechend sind die Gurte 27 zumindest im Walk- und Tränkbereich B der Flachbandanlage 16 bevorzugt korrespondierend zu den dortigen Stützbändern 2b, 3b oder Endlösbändern 2, 3 geführt. Bei aufwendigen Flachbahnanlagen 16 können auch zwei Gurte 27 oben und unten je Seite vorgesehen sein.

Im in Fig. 3 dargestellten Fall von auf den Walk- und Tränkbereich B beschränkter Stützbänder 2b, 3b, ... können die Gurte 27 vorteilhaft unmittelbar vor und nach der Walk- und Tränkstrecke B zu- und abgeführt werden. Insbesondere kann die Zu- und Abführung der Gurte 27 dabei, wie deren Anordnung insgesamt, aus bzw. innerhalb einer Vertikalen erfolgen, also vorzugsweise korrespondierend zu den, den Walk- und Tränkbereich B durchlaufenden Stützbändern 2b und 3b, was vorteilhaft den Rückgriff auf zusätzliche Führungsmittel (Rollen, Antriebe, etc.) ganz oder teilweise überflüssig macht. Alternativ und unabhängig davon, welche Trag- und/oder Stützmedien Verwendung finden, ist auch denkbar, die Gurte 27 aus einer horizontalen, insbesondere seitlich einschwenkenden, Anordnung heraus vor und nach dem Walk- und Tränkbereich B zu- und abzuführen (nicht dargestellt). Soweit es schließlich insbesondere für das Aushärten bestimmter Harzansätze 9 förderlich ist, können die Gurte 27 freilich auch durch die gesamte Anlage, insbesondere korrespondierend zu den Endlosbändern 2, 3, mitgeführt werden.

Vorzugsweise sind die Gurte 27 passiv angetrieben, insbesondere durch die Stützbänder 2b, 3b oder Endlosbänder 2, 3 und/oder durch die Walkrollen 11, 12, die im Walk- und Tränkbereich B angeordnet sind. Diese Walkrollen 11, 12 sind vorzugsweise ebenfalls nicht selbst angetrieben, sondern werden von wenigstens einem Bandantrieb (nicht dargestellt) indirekt angetrieben. Die Gurte 27 lassen sich so über die Stützbänder 2b, 3b oder Endlosbänder 2, 3 spannen bzw. erfahren so einen Kraftschluss, dass vorteilhaft kein gesonderter Antrieb für die Gurte 27 vorzusehen ist.

Erfindungsgemäß bevorzugt finden Gurte 27 Verwendung, die aus Schaumstoff oder einem alternativem Material mit bedingt komprimierbaren Eigenschaften gebildet sind. Die komprimierbare Wirkung des Gurtmaterials dient vorteilhaft zum Ausgleich von Dickenschwankungen zwischen den Stützbändern 2b, 3b oder Endlosbändern 2, 3, welche im Bereich des freien Durchhangs zwischen den Walkrollen 11, 12 und/oder Umlenkrollen 22 insbesondere im Walk- und Tränkbereich B auftreten, wie dies die Gurtquerschnitte in Fig. 4a und 4b verdeutlichen.

Eine effektive Abdichtung ist nach der Erfindung bevorzugt mit Gurten 27 gewährleistet, deren Schaumstoff oder alternatives Material in seiner Härte und Dicke so gewählt ist, dass bei der Komprimierung des Gurtes 27 im Spalt zwischen in Produktionsrichtung P benachbarten Walkrollen 11, 12 des Walk- und Tränkbereiches B, ein zumindest minimaler Anpressdruck zwischen dem oberen und unteren Tragmedium entsteht, der größer ist, als der von den Walkrollen 11, 12 auf die Harzansatzschichten 5, 8 ausgeübte Flächendruck. Ein solcher Anpressdruck gewährleistet ausreichend vorteilhaft die effektive Abdichtung zwischen den Tragmedien (Bändern 2, 3 oder Tragfolien 32, 33) und den Gurten 27. Es versteht sich, dass auch bei nur einseitiger Darstellung der Gurte 27, diese vorzugsweise auf beiden Seiten entlang der Ränder angeordnet sind.

Fig. 5 zeigt, wie in einer Weiterbildung der Erfindung vorgesehen ist, dass wenigstens einer der Gurte 27 in der Breitenposition zu der oder den Harzansatzschicht/en 5, 8, in der die Gurte 27 mitlaufen, verstellbar ausgebildet ist; vorzugsweise abgestimmt auf die Einstellbarkeit der Breite der Rakel 4, 7 und der Faserzuführvorrichtung 28. Die Einstellbarkeit der Breite der Hartansatzschichten 5, 8 und die nach der Erfindung nicht mehr notwendige Besäumung der Längsseiten 26 der ausgereiften Harzmatte 10 gestattet vorteilhaft die Herstellung von Harzmatten 10 in einer auf weitere Verarbeitungsgänge (insb. Pressenwerkzeuge) angepasste Breiten. Insbesondere kann vorgesehen sein, dass zur Breiteneinstellung wenigstens einen Gurtes 27 dieser über zumindest eine quer zur Walk- und Tränkstrecke B verstellbare Führungsrolle 30 geführt ist, die vorzugsweise auf einer quer verlaufenden Achse oder Traverse 35 verstellbar, ggf. über eine Verstellspindel, gelagert ist.

Fig. 6 zeigt eine Harzmatte 10, hergestellt in einem Verfahren nach Anspruch 1 oder in einer Anlage nach einem der Ansprüche 2 bis 12, gekennzeichnet durch eine ohne Besäumung deren Längsseiten 26 erhaltene Harzmatte 10 mit einem über ihre Breite konstantem Flächengewicht.

Eine solchermaßen hergestellte Harzmatte 10 ist gegenüber bestehenden Fertigungsprozessen unmittelbar weiter verarbeitbar. Durch Wegfall der bislang notwendigen Harzmatten-Besäumung können der Fertigungsprozess beschleunigt und die Gestehungskosten gesenkt werden. Ferner entfällt die teure Entsorgung der Besäumabfälle.

### Bezugszeichenliste P1447:

| | | | |
|---|---|---|---|
| 2 | Band | 22 | Umlenkrollen |
| 2a, 2b, 2c | Stützband | 23 | Austrittspunkt |
| 3 | Band | 24 | Heizvorrichtung |
| 3b, 3c | Stützband | 25 | Eindickvorrichtung |
| 4 | Rakel | 26 | Längsseiten |
| 5 | Harzansatzschicht | 27 | Gurt |
| 6 | Fasern | 28 | Faserzuführvorrichtung |
| 7 | Rakel | 29 | Oberseite |
| 8 | Harzansatzschicht | 30 | Führungsrolle |
| 9 | Harzansatz | 31 | Oberseite |
| 10 | Harzmatte | 32 | Tragfolie |
| 11 | Walkrollen | 33 | Tragfolie |
| 12 | Walkrollen | 34 | Längskanten |
| 13 | Rand | 35 | Traverse |
| 14 | Walk- und Tränkvorrichtung | 36 | Folienaufwicklungen |
| | | 37 | Quertraverse |
| 15 | Folienabzug | 38 | Auftragsvorrichtung |
| 16 | Flachbahnanlage | | |
| 17 | Zuschnittvorrichtung | A | Aufbringbereich |
| 18 | Zuschnittmatte | B | Walk- und Tränkbereich |
| 19 | Übergabevorrichtung | C | Eindickbereich |
| 20 | Formpresse | | |
| 21 | Formteil | P | Produktionsrichtung |

## Patentansprüche

1. Verfahren zur Herstellung von faserverstärkten Formteilen (21), insbesondere mittels Fließpressen in einer Formpresse (20), aus einer in einer Flachbandanlage (16) kontinuierlich hergestellten faserverstärkten Harzmatte (10), wobei in der Flachbandanlage (16) in einem Aufbringbereich (A) für Harzansatz (9) zumindest eine Harzansatzschicht (5, 8) auf ein unteres und/oder oberes Tragmedium aufgebracht und mit Fasern (6) zusammengeführt, in einem nachfolgenden Walk- und Tränkbereich (B) vermischt und schließlich in einem Eindickbereich (C) zu einer, vorzugsweise endlosen, Harzmatte (10) gereift wird, **dadurch gekennzeichnet, dass** zumindest beim Durchlauf der Harzansatzschicht/en (5, 8) durch den Walk- und Tränkbereich (B) entlang deren Ränder (13) und parallel zur Produktionsrichtung (P) jeweils zumindest ein Gurt (27) mitgeführt ist, der während des Walkvorgangs die ein oder mehreren Tragmedien für die Harzansatzschicht/en (5, 8) seitlich so zusammendrückt, dass zumindest im Walk- und Tränkbereich (B) eine Seitenbegrenzung für die zu vermischenden Fasern (6) und Harzansatzschicht/en (5, 8) ausgebildet wird.

2. Anlage zur Herstellung von faserverstärkten Formteilen (21), insbesondere mittels Fließpressen in einer Formpresse (20), aus einer in einer Flachbandanlage (16) kontinuierlich hergestellten faserverstärkten Harzmatte (10), wobei in der Flachbandanlage (16) in einem Aufbringbereich (A) für Harzansatz (9) zumindest eine Harzansatzschicht (5, 8) auf ein unteres und/oder oberes Tragmedium aufgebracht und mit Fasern (6) zusammengeführt, in einem nachfolgenden Walk- und Tränkbereich (B) vermischt und schließlich in einem Eindickbereich (C) zu einer, vorzugsweise endlosen, Harzmatte (10) gereift wird, wobei zumindest beim Durchlauf der Harzansatzschicht/en (5, 8) durch den Walk- und Tränkbereich (B) entlang deren Längsränder (13) und parallel zur Produktionsrichtung (P) jeweils zumindest ein Gurt (27) mitgeführt ist, der während des Walkvorgangs die ein oder mehreren Tragmedien für die Harzansatzschicht/en (5, 8) seitlich so zusammendrückt, dass im Walk- und Tränkbereich (B) eine Seitenbegrenzung für die zu vermischenden Fasern (6) und Harzansatzschicht/en (5, 8) ausgebildet ist,
wobei die Tragmedien für die Harzansatzschicht/en (5, 8) durch ein unteres und ein oberes endloses Band (2, 3) oder durch eine untere und eine obere Tragfolie (32, 33) gebildet sind, mit welchen die Harzansatzschicht/en (5, 8) durch den Aufbringbereich (A), den Walk- und Tränkbereich (B) und ggf. durch einen Eindickbereich (C) geführt sind, **dadurch gekennzeichnet, dass** die Gurte (27) oberhalb und/oder unterhalb der Bänder (2, 3) oder einer oder beider Tragfolien (32, 33) angeordnet sind.

3. Anlage nach Anspruch 2, **dadurch gekennzeichnet, dass** zumindest im Walk- und Tränkbereich (B) die untere Tragfolie (32) von einem unteren Stützband (2b) und/oder die obere Tragfolie (33) von dem oberen Stützband (3b) gestützt ist.

4. Anlage nach Anspruch 2 oder 3, **dadurch gekennzeichnet, dass** auch im Aufbringbereich (A) und/oder im Eindickbereich (C) die untere Tragfolie (32) von einem unteren Stützband (2a; 2c) und/oder die obere Tragfolie (33) von einem oberen Stützband (3c) gestützt sind.

5. Anlage nach einem der Ansprüche 2 bis 4, **dardurch gekennzeichnet**, dass im Aufbringbereich (A), den Walk- und Tränkbereich (B) und ggf. den Eindickbereich (C) die Tragfolien (32, 33) von die Flachbandanlage (16) durchlaufenden Bänder (2, 3) gestützt sind.

6. Anlage nach einem der Ansprüche 3 bis 5, **dardurch gekennzeichnet**, dass die Gurte (27) mit ihrer einen Oberseite (29) an einer Tragfolie (32, 33) anliegend und mit ihrer anderen Oberseite (31) an einem Stützband (2b, 3b) oder endlosem Band (2, 3) anliegend geführt sind.

7. Anlage nach einem der Ansprüche 2 bis 6, **darduch gekennzeichnet**, dass die Gurte (27) zumindest im Walk- und Tränkbereich (B) der Flachbandanlage (16) korrespondierend zu dem dortigen Stützband (2b, 3b) oder endlosem Band (2, 3) geführt sind.

8. Anlage nach einem der vorherigen Ansprüche 2 bis 7, wobei im Walk- und Tränkbereich (B) eine durch untere und obere Walkrollen (11, 12) gebildete Walk- und Tränkvorrichtung (14) angeordnet ist, **dadurch gekennzeichnet, dass** die Gurte (27) durch die Walkrollen (11, 12) und/oder die Stützbänder (2b, 3b) oder endlosen Bänder (2, 3) passiv angetrieben sind.

9. Anlage nach einem der Ansprüche 2 bis 8, **dardurch gekennzeichnet**, dass die Gurte (27) aus Schaumstoff mit bedingt komprimierbaren Eigenschaften gebildet sind.

10. Anlage nach einem der Ansprüche 2 bis 9, **dadurch gekennzeichnet, dass** der Schaumstoff oder alternative Materialien der Gurte (27) in seiner Härte und Dicke so gewählt ist, dass bei der Komprimierung des Gurtes (27) im Spalt zwischen in Produktionsrichtung (P) benachbarten Walkrollen (11, 12) des Walk- und Tränkbereiches (B), ein zumindest minimaler Anpressdruck zwischen der oberen und unteren Tragmedien entsteht, der größer ist, als der von den Walkrollen (11, 12) auf die Harzansatzschichten (5, 8) ausgeübte Flächendruck.

11. Anlage nach einem der Ansprüche 2 bis 10, **dadurch gekennzeichnet, dass** wenigstens einer der Gurte (27) in der Breitenposition zu der oder den Harzansatzschicht/en (5, 8), in der die Gurte (27) mitlaufen, verstellbar ausgebildet ist, vorzugsweise abgestimmt auf die Einstellbarkeit der Breite der Rakel (4, 7) und/oder der Faserzuführvorrichtung (28).

12. Anlage nach Anspruch 11, **dadurch gekennzeichnet, dass** zur Breiteneinstellung wenigstens einen Gurtes (27) dieser über zumindest eine quer zur Walk- und Tränkstrecke (B) verstellbare Führungsrolle (30) geführt ist, die vorzugsweise auf einer quer verlaufenden Achse oder Traverse (35) verstellbar gelagert ist.

## Claims

1. A method for producing fiber-reinforced molded parts (21), in particular by means of extrusion in a molding press (20), from a fiber-reinforced resin mat (10) continuously produced in a flat belt system (16), wherein, in the flat belt system (16), at least one resin-batch layer (5, 8) is applied in an application region (A) for the resin batch (9) to a lower and/or upper support medium and merged with fibers (6), is mixed in a downstream fulling and impregnating region (B) and is finally matured in a thickening region (C) to form a preferably continuous resin mat (10), **characterized in that** at least during the passage of the resin-batch layer(s) (5, 8) through the fulling and impregnating region (B) at least one belt (27) is entrained along edges (13) thereof and parallel to the production direction (P), which belt compresses the one or more support media for the resin-batch layer(s) (5, 8) laterally during the fulling process, so that at least in the fulling and impregnating region (B) a side boundary for the fibers (6) to be mixed and the resin-batch layer(s) (5, 8) is formed.

2. An installation for producing fiber-reinforced molded parts (21), in particular by means of extrusion in a molding press (20), from a fiber-reinforced resin mat (10) continuously produced in a flat belt system (16), wherein, in the flat belt system (16), at least one resin-batch layer (5, 8) is applied in an application region (A) for the resin batch (9) to a lower and/or upper support medium and merged with fibers (6), is mixed in a downstream fulling and impregnating region (B) and is finally matured in a thickening region (C) to form a preferably continuous resin mat (10), wherein at least during the passage of the resin-batch layer(s) (5, 8) through the fulling and impregnating region (B) at least one belt (27) is entrained along edges (13) thereof and parallel to the production direction (P), which belt compresses the one or more support media for the resin-batch layer(s) (5, 8) laterally during the fulling process, so that in the fulling and impregnating region (B) a side boundary for the fibers (6) to be mixed and the resin-batch layer(s) (5, 8) is formed,
wherein the support media for the resin-batch layer(s) (5, 8) are formed by a lower and an upper endless belt (2, 3) or by a lower and an upper support film (32, 33), with which the resin-batch layer(s) (5, 8) are guided through the application region (A), the fulling and impregnating region (B) and optionally through a thickening region (C), **characterized in that** the belts (27) are arranged above and/or below the belts (2, 3) or one or both support films (32, 33).

3. An installation according to claim 2, **characterized in that**, at least in the fulling and impregnating region (B), the lower support film (32) is supported by a lower support belt (2b) and/or the upper support film (33) by the upper support belt (3b).

4. An installation according to claim 2 or 3, **characterized in that** the lower support film (32) of a lower support belt (2a; 2c) and/or the upper support film (33) of an upper support belt (3c) are also supported in the application region (A) and/or in the thickening region (C).

5. An installation according to one of the claims 2 to 4, **characterized in that** the support films (32, 33) of belts (2, 3) passing the flat belt system (16) are supported in the application region (A), the fulling and impregnating region (B) and optionally the thickening region (C).

6. An installation according to one of the claims 3 to 5, **characterized in that** the belts (27) are guided with their one upper side (29) resting on a support film (32, 33) and with their other upper side (31) resting on a support belt (2b, 3b) or endless belt (2, 3).

7. An installation according to one of the claims 2 to 6, **characterized in that** the belts (27) are guided at least in the fulling and impregnating region (B) of the flat belt system (16) corresponding to the support belt (2b, 3b) or endless belt (2, 3) there.

8. An installation according to one of the preceding claims 2 to 7, wherein in the fulling and impregnating area (B) a fulling and impregnating device (14) formed by upper and lower fulling rollers (11, 12) is arranged, **characterized in that** the belts (27) are passively driven by the fulling rollers (11, 12) and/or the support belts (2b, 3b) or endless belts (2, 3).

9. An installation according to one of the claims 2 to 8, **characterized in that** the belts (27) are formed of foam with conditionally compressible properties.

10. An installation according to one of the claims 2 to 9, **characterized in that** the foam or alternative materials of the belts (27) are selected in their hardness and thickness so that an at least minimal contact pressure arises between the upper and lower support media in the compression of the belt (27) in the gap between fulling rollers (11, 12) of the fulling and impregnating region (B) which adjoin each other in the direction of production (P), which contact pressure is greater than the surface pressure exerted by the fulling rollers (11, 12) on the resin-batch layers (5, 8).

11. An installation according to one of the claims 2 to 10, **characterized in that** at least one of the belts (27) in the width position to the resin-batch layer(s) (5, 8), in which the belts (27) are entrained, is formed to be adjustable, preferably matched to the adjustability of the width of the doctor blades (4, 7) and/or the fiber feed device (28).

12. An installation according to claim 11, **characterized in that** for the width adjustment of at least one belt (27) said belt is guided over at least one guide roller (30) which can be adjusted transversely to the fulling and impregnating path (B) and which is preferably adjustably mounted on a transversely extending axis or crossbeam (35).

## Revendications

1. Procédé pour la fabrication de pièces mises en forme (21) armées de fibre, en particulier par formage par fluage dans une presse de formage (20), à partir d'un mat de résine armé de fibres (10) fabriqué en continu dans une installation de production de bande à plat (16), dans lequel au moins une couche de dépôt de résine (5, 8) est d'abord appliquée sur un matériau de support supérieur et/ou inférieur dans l'installation de production de bande à plat (16), dans une zone d'application (A) du dépôt de résine (9), et rassemblée avec des fibres (6), puis mélangée dans une zone de foulage et d'imprégnation (B) et enfin maturée dans une zone d'épaississement (C) pour donner un mat de résine (10) de préférence sans fin, **caractérisé en ce qu'**au moins lors du passage de la ou des couches de dépôt de résine (5, 8) à travers la zone de foulage et d'imprégnation (B), au moins une sangle (27) suit le long de chacun de leurs bords (13) et parallèlement au sens de production (P) et comprime, pendant le processus de foulage, les un ou plusieurs matériaux de support de la ou des couches de dépôt de résine (5, 8) latéralement, de manière à former, au moins dans la zone de foulage et d'imprégnation (B), une délimitation latérale pour les fibres (6) à mélanger et la ou les couches de dépôt de résine (5, 8).

2. Installation pour la fabrication de pièces mises en forme (21) armées de fibre, en particulier par pressage par fluage dans une presse de formage (20), à partir d'un mat de résine armé de fibres (10) fabriqué en continu dans une installation de production de bande à plat (16), au moins une couche de dépôt de résine (5, 8) étant d'abord appliquée sur un matériau de support supérieur et/ou inférieur dans l'installation de production de bande à plat (16), dans une zone d'application (A) du dépôt de résine (9), et rassemblée avec des fibres (6), puis mélangée dans une zone de foulage et d'imprégnation (B) et enfin maturée dans une zone d'épaississement (C) pour donner un mat de résine (10) de préférence sans fin, dans laquelle, au moins lors du passage de la ou des couches de dépôt de résine (5, 8) à travers la zone de foulage et d'imprégnation (B), au moins une sangle (27) suit le long de chacun de leurs bords longitudinaux (13) et parallèlement au sens de production (P) et comprime, pendant le processus de foulage, les un ou plusieurs matériaux de support de la ou des couches de dépôt de résine (5, 8) latéralement, de manière à former, au moins dans la zone de foulage et d'imprégnation (B), une délimitation latérale pour les fibres (6) à mélanger et la ou les couches de dépôt de résine (5, 8), dans laquelle les matériaux de support de la ou des couches de dépôt de résine (5, 8) sont formés par une bande sans fin inférieure et une autre supérieure (2, 3) ou par un film de support inférieur et un autre inférieur (32, 33) avec lesquels les couches de dépôt de résine (5, 8) sont guidées à travers la zone d'application (A), la zone de foulage et d'imprégnation (B) et éventuellement la zone d'épaississement (C), **caractérisée en ce que** les sangles (27) sont disposées au-dessus et/ou en dessous des bandes (2, 3) ou d'un ou des deux films de support (32, 33).

3. Installation selon la revendication 2, **caractérisée en ce qu'**au moins dans la zone de foulage et d'imprégnation (B), le film de support inférieur (32) est soutenu par une bande de soutien inférieure (2b) et/ou le film de support supérieur (33) par la bande de soutien supérieure (3b).

4. Installation selon la revendication 2 ou 3, **caractérisée en ce que**, dans la zone d'application (A) et/ou dans la zone d'épaississement (C) aussi, le film de support inférieur (32) est soutenu par une bande de soutien inférieure (2a ; 2c) et/ou le film de support supérieur (33) par une bande de soutien supérieure (3c).

5. Installation selon l'une des revendications 2 à 4, **caractérisée en ce que**, dans la zone d'application (A), la zone de foulage et d'imprégnation (B) et éventuellement la zone d'épaississement (C), les films de support (32, 33) sont soutenus par des bandes (2, 3) qui traversent l'installation de production de bande à plat (16).

6. Installation selon l'une des revendications 3 à 5, **caractérisée en ce que** les sangles (27) sont guidées en reposant par une face supérieure (29) sur un film de support (32, 33) et par leur autre face supérieure (31) sur une bande d'appui (2b, 3b) ou une bande sans fin (2, 3).

7. Installation selon l'une des revendications 2 à 6, **caractérisée en ce que** les sangles (27) sont guidées, au moins dans la zone de foulage et d'imprégnation (B) de l'installation de production de bande à plat (16), en correspondance avec la bande d'appui (2b, 3b) ou la bande sans fin (2, 3) de cet endroit.

8. Installation selon l'une des revendications 2 à 7, dans laquelle est disposé, dans la zone de foulage et d'imprégnation (B), un dispositif de foulage et d'imprégnation (14) formé par des cylindres de foulage inférieur et supérieur (11, 12), **caractérisée en ce que** les sangles (27) sont entraînées passivement par les cylindres de foulage (11, 12) et/ou les bandes de soutien (2b, 3b) ou les bandes sans fin (2, 3).

9. Installation selon l'une des revendications 2 à 8, **caractérisée en ce que** les sangles (27) sont faites de mousse compressible dans certaines conditions.

10. Installation selon l'une des revendications 2 à 9, **caractérisée en ce que** la mousse ou d'autres matériaux des sangles (27) sont choisis avec une dureté et une épaisseur telle que lors de la compression de la sangle (27) dans l'espace entre les cylindres de foulage (11, 12) de la zone de foulage et d'imprégnation (B) voisins dans le sens de production (P), il se crée une pression d'appui au moins minimale entre les matériaux de support supérieur et inférieur qui est plus grande que la pression en surface exercée par les cylindres de foulage (11, 12) sur les couches de dépôt de résine (5, 8).

11. Installation selon l'une des revendications 2 à 10, **caractérisée en ce que** la position en largeur d'au moins une des sangles (27) est réglable par rapport à la ou aux couches de dépôt de résine (5, 8) que les sangles (27) suivent, de préférence adaptable à la possibilité d'ajuster la largeur des racles (4, 7) et/ou du dispositif d'alimentation en fibres (28).

12. Installation selon la revendication 11, **caractérisée en ce qu'**en vue du réglage en largeur d'au moins une sangle (27), celle-ci est guidée sur au moins un cylindre de guidage (30) réglable transversalement par rapport au trajet de foulage et d'imprégnation (B), qui est supporté de préférence de façon ajustable sur un axe transversal ou une traverse (35).
